# EUROPÄISCHE PATENTSCHRIFT

(11) **EP 2 633 947 B1**
(45) Veröffentlichungstag und Bekanntmachung des Hinweises auf die Patenterteilung: **20.05.2015**
(21) Anmeldenummer: 13001085.3
(22) Anmeldetag: 02.08.2011
(51) Int. Cl.: B23Q 9/02

(54) **Zirkular-Fräsmodul**
Circular milling module
Module de fraisage circulaire

(30) Priorität: 20.08.2010 DE 102010039594
(43) Veröffentlichungstag der Anmeldung: 04.09.2013
(62) Teilanmeldung aus: 11740637.1
(73) Patentinhaber: Siemens Aktiengesellschaft, 80333 München (DE)
(72) Erfinder: Rynkowski, Patrick, 47055 Duisburg (DE); Vogt, Felix, 46119 Oberhausen (DE)

(56) Entgegenhaltungen:
- DD-A- 91 407
- US-A- 3 916 519
- SCHENK W-D: "Zirkularfraesen loest Tiefenprobleme", TECHNISCHE RUNDSCHAU, HALLWAG AG, CH, Bd. 99, Nr. 12, 22. Juni 2007 (2007-06-22) , Seiten 22-23, XP001523886, ISSN: 1023-0823

## Beschreibung

Die vorliegende Erfindung betrifft ein Zirkular-Fräsmodul, das insbesondere für den Einsatz einer Kupplungsbohrungs-Bearbeitungsvorrichtung geeignet ist, nach dem Oberbegriff von Anspruch 1.

Kupplungsbohrungs-Bearbeitungsvorrichtungen der vorgenannten Art sind bekannt und werden insbesondere eingesetzt, um die Kupplungsflansche von Turbinen- bzw. Generatorwellen einer spanenden Endbearbeitung und hier speziell einer Honbearbeitung zu unterziehen.

Kraftwerke mit fossiler und atomarer Energiebereitstellung bedienen sich in aller Regel dem Prinzip der Dampferzeugung mit einer anschließenden Expansion im sogenannten Dampfturbinen-Teil. Zugunsten eines optimalen Wirkungsgrades wird dort der Wasserdampf stufenweise entspannt, wobei zusätzlich eine Zwischenüberhitzung realisiert wird. So entsteht der typische Aufbau beginnend mit einer Hochdruck (HD)-Turbine über eine Mitteldruck (MD)-Turbine bis hin zu einer meist doppelflutig ausgeführten Niederdruck (ND)-Turbine. Aus der Expansion des Dampfes resultiert eine technische Rotationsarbeit. Die Wellen der HD-, MD- sowie ND-Turbinenwellen sind mittels sogenannter Kupplungsflansche miteinander verbunden, denen die Aufgabe der Drehmomentübertragung obliegt. Realisiert wird die Übertragung des Drehmomentes durch eine formschlüssige Verbindung der Kupplungsflansche. Hierzu sind auf einem zur Wellenachse koaxial angeordneten Teilkreis Durchgangsbohrungen vorgesehen, in welche Kupplungsbolzen für eine formschlüssige Drehmomentübertragung eingepasst sind. Über die Kupplungsbolzen werden die Kupplungsflansche auch miteinander verspannt.

Im Extremfall muss jede Kupplung einem plötzlichen Stillstand des Generators, auch Erdschluss genannt, ohne Versagen standhalten können. In diesem Fall werden die Kupplungsbolzen immens auf Scherung beansprucht. Nicht zuletzt ist die korrekte Endbearbeitung der Kupplungsbohrungen ein Garant für einen sicheren Betrieb des Kraftwerkes. Damit ist eine Honbearbeitung unausweichlich.

Diese Honendbearbeitung wird üblicherweise vor Ort durchgeführt, um zu gewährleisten, dass die Kupplungsbohrungen der zu verbindenden Kupplungsflansche exakt zueinander ausgerichtet sind und korrespondieren. Entsprechend sind die bekannten Kupplungsbohrungs-Bearbeitungsvorrichtungen, auch kurz HKB (Hon-Kupplungs-Bearbeitungsmaschine) genannt, für den mobilen Vorort-Einsatz vorgesehen. Die bekannten HKB besitzen ein Maschinenportal, das von zwei außenliegenden, halbrunden Ständern gebildet wird, die an ihren unten liegenden Enden durch horizontal liegende Rechteckprofile miteinander verbunden sind. Über das Portal wird die HKB ortfest, insbesondere auf der Teilfuge des Lagergehäuses zwischen den Turbinengehäusen fixiert. Des Weiteren trägt die HKB die eigentliche Bearbeitungseinheit, d.h. die Honantriebs- und Führungseinheiten, die zur Positionierung gegenüber der zu bearbeitenden Kupplungsbohrung an einer Kreisbogenführung des Portals bewegbar ist.

Ein Nachteil der bekannten HKB ist die beschränkte Einsetzbarkeit durch das extern zu fixierende Maschinenportal. So ist die Honmaschine grundsätzlich von "kupplungsnahen" Anschlussmöglichkeiten abhängig. Die im Regelfall sehr stark variierenden Gegebenheiten vor Ort erschweren den Einsatz zusätzlich. Oft ist es daher erforderlich, zusätzlich zu fertigende, kostenintensive Konsolen bzw. Befestigungssystems vorzusehen. Darüber hinaus ist aufgrund des hohen Montageaufwands die Einsatzzeit lang, wodurch die Maschinenproduktivität verhältnismäßig gering liegt. Schließlich begrenzt das vorhandene Maschinenportal den potentiellen Außendurchmesser-Einsatzbereich, da es keinen Raum für etwaige Anpassungen bzw. größere Durchmesser bietet. Nicht zuletzt ist die lediglich manuell durchzuführende Justierung der Maschine (Verstellen der Honeinheit an der Kreisbogenführung des Portals) ebenfalls verbesserungsfähig.

Aus dem Artikel "Zirkularfräsen löst Tiefenprobleme" von Schenk W-D, Technische Rundschau, Hallwag AG, CH ist ein gattungsgemäßes Zirkular-Fräsmodul bekannt. Dieses umfasst einen an einem Basisträger anbringbaren Grundkörper und eine mit einem Antrieb verbundene Frässpindel mit einer in Z-Richtung verlaufenden Spindelachse, an der ein Fräskopf drehfest aber axial verstellbar montiert ist.

Aus der DD 91 407 A ist ferner ein transportables Bohrwerk bekannt, bei dem eine Arbeitsspindel entlang eines Teilkreises bewegbar gehalten ist.

Vor diesem Hintergrund ist es die Aufgabe der vorliegenden Erfindung, ein Zirkular-Fräsmodul der eingangs genannten Art zu schaffen, das variabel und unabhängig einsetzbar ist und auch bei beengten Platzverhältnissen am Bearbeitungsort schnell und mit geringem Aufwand montiert werden kann.

Diese Aufgabe ist erfindungsgemäß bei einem Zirkular-Fräsmodul durch die kennzeichnenden Merkmale von Anspruch 1 gelöst.

Der Erfindung liegt die Überlegung zugrunde, die Kupplungsbohrungen vor der Honendbearbeitung durch einen Zirkular-Fräsvorgang zu bearbeiten. Die unterbrochene Spanabnahme bei einem solchen Zirkular-Fräsen erzeugt kurze Späne, die sich einfach aus der Bohrung entfernen lassen. Des Weiteren findet keine negative Beeinflussung der Frässpindel durch Aufstauung oder Verhedderung statt. Außerdem ist die zu erwartende Oberflächenqualität besser als die Qualität, die durch die konventionelle Spindelbearbeitung erzielbar ist. Im Ergebnis werden bessere Voraussetzungen für die abschließende Honbearbeitung geschaffen.

Im Übrigen erlauben die relativ kleinen Fräsbearbeitungsbelastungen beim Zirkular-Fräsen eine kompakte, platzsparende und miniaturartige Konstruktion, die insbesondere vor dem Hintergrund, dass ohnehin relativ wenig Platz zur Verfügung steht, von Vorteil ist. Im Endeffekt können beliebigen Kupplungsbohrungen sukzessive im Schrupp- bzw. im Schlichtschnitt bearbeitet werden.

Die Idee, Bohrungen im Zirkular-Fräsverfahren herzustellen, kann unabhängig von der Art der verwendeten Portale eingesetzt werden. Insbesondere ist es möglich, auch herkömmliche Portale, die nicht an der Kupplung montiert, sondern ortsfest vorgesehen werden, mit derartigen Zirkular-Fräsmodulen auszustatten.

Im Betrieb werden zunächst die zum Teil versetzten Achsen bzw. unterschiedlichen Durchmesser der Kupplungsbohrungen über Messtaster erfasst. Ziel ist eine einheitliche Kupplungsbohrung (eine gemeinsame Achse) mit optimaler Zylinderform (Toleranz 0,02mm), deren Absolutkoordinaten (X-Y) beeinflussbar sind.

Auf der Grundlage der ermittelten Messdaten wird über die Steuerung ein CNC-gesteuerter Zirkular-Fräsprozess gestartet, bei dem die Frässpindel mit entsprechend hoher Drehzahl gedreht wird. Auf der Frässpindel ist ein Fräskopf drehfest, aber in Z-Richtung mittels eines linearen Vorschubsystems verfahrbar ist, montiert. Die Frässpindel ist beidseitig über Tragarme gelagert, und zwar vorzugsweise nach Art einer Fest-Los-Lagerung. Während des Fräsens werden die Tragarme in der X-Y-Ebene bewegt, um die Position der Spindelachse in der X-Y-Ebene zu verändern und so den Zirkular-Fräsprozess auszuführen.

Gemäß einer bevorzugten Ausführungsform ist vorgesehen, dass die Tragarme an einem Rahmen angebracht und gegenüber diesem in einer radial bezüglich der Kreisbogenführung liegenden Y-Richtung verstellbar sind, und der Rahmen an dem Grundkörper in einer X-Richtung, die senkrecht zu der Y-Richtung und parallel zu der X-Y-Ebene liegt, verstellbar gehalten ist. Bei dieser Ausgestaltung werden die Tragarme in X-Richtung über den Rahmen verstellt und führen selbst die Bewegung in der Y-Richtung aus. Mit anderen Worten erfolgt eine Entkopplung der Bewegungen, so dass eine präzise Steuerung möglich ist. In einfacher Weise kann dabei nur einer der Tragarme an dem Grundkörper bzw. Rahmen verstellbar geführt sein, wenn die beiden Tragarme miteinander verbunden sind.

Um die Flexibilität und den Einsatzbereich des Zirkular-Fräsmoduls zu erhöhen, können die beiden Tragarme in Z-Richtung relativ zueinander verstellbar sein. Auf diese Weise können unterschiedlich lange Frässpindeln eingesetzt werden, die entsprechend der Klemmlänge der jeweiligen Kupplung gewählt werden.

Der Fräskopf ist gemäß einer Ausführungsform der Erfindung an einem Support lösbar angebracht, insbesondere stirnseitig festgeschraubt, der an der Frässpindel drehfest angebracht und axial verschiebbar geführt ist. Die lösbare Anbringung des Fräskopfes an dem Support erlaubt es, unterschiedliche Fräsköpfe zu montieren. Dies eröffnet die Möglichkeit, auch Verschnitte (Kupplungszylindersenkungen) zirkular zu bearbeiten. Dabei ist eine Rechtwinkligkeit zur Kupplungsbohrung zu 100% gewährleistet, wenn entsprechende Zentrierflächen vorgesehen sind. Beispielsweise können an dem Support und/oder dem Fräskopf zueinander korrespondierende kegelförmige Zentrierflächen vorgesehen sein.

In weiterer Ausgestaltung ist vorgesehen, dass die Frässpindel einerseits und der Support bzw. der Fräskopf andererseits zueinander korrespondierende, sich in Axialrichtung erstreckende Führungsmittel, insbesondere an der Frässpindel ausgebildete Schienen und in den Support eingesetzte Führungswagen aufweisen, wobei korrespondierende Paare von Führungsmitteln insbesondere auf gegenüberliegenden Seiten der Spindelachse vorgesehen sind.

Für die Bewegung des Fräskopfes entlang der Frässpindel kann in der Frässpindel eine sich in Z-Richtung erstreckende und insbesondere in Umfangsrichtung mittig zwischen den Führungsmittel positionierte Ausnehmung vorgesehen sein, in welcher eine Gewindespindel, insbesondere eine Kugelumlaufspindel drehbar gelagert ist, die eine an dem Fräskopf bzw. dem Support fixierte Gewindemutter trägt. Mit anderen Worten kann in an sich bekannter Weise der Fräskopf axial bewegt werden, indem die Gewindespindel relativ zu der Frässpindel rotiert wird.

Dabei kann die Gewindespindel ein Antriebsritzel tragen, welches mit der Innenseite eines koaxial zu der Frässpindel drehbar gehaltenen und antreibbaren Hohlrads in Eingriff steht. Im Betrieb werden sowohl die Frässpindel als auch das Hohlrad angetrieben. Wenn die Drehzahl des Hohlrads gleich der Drehzahl der Spindel ist, steht der Fräskopf, und wenn die Drehzahl des Hohlrads kleiner oder größer als die der Spindel ist, verfährt der Fräskopf in Z-Richtung.

Hinsichtlich weiterer vorteilhafter Ausgestaltungen der Erfindung wird auf die Unteransprüche sowie nachfolgende Beschreibung eines Ausführungsbeispiels unter Bezugnahme auf die beiliegende Zeichnung verwiesen. In der Zeichnung zeigt
- Figur 1: eine Kupplungsbohrungs-Bearbeitungsvorrichtung in perspektivischer Darstellung von schräg vorne betrachtet,
- Figur 2: die Kupplungsbohrungs-Bearbeitungsvorrichtung aus Figur 1, die an einem zu bearbeitenden Kupplungsflansch montiert ist, in perspektivischer Vorderansicht,
- Figur 3: die Kupplungsbohrungs-Bearbeitungsvorrichtung aus Figur 2 in perspektivischer Darstellung von schräg hinten betrachtet,
- Figur 4: die Kupplungsbohrungs-Bearbeitungsvorrichtung aus Figur 2 ohne Bearbeitungsmodul in perspektivischer Darstellung,
- Figur 5: in perspektivischer Vorderansicht einen Ständer eines Portals der Kupplungsbohrungs-Bearbeitungsvorrichtung,
- Figur 6: einen Stützfuß des Portals aus Figur 5 in perspektivischer Darstellung,
- Figur 7: in perspektivischer Darstellung eine Befestigungsstrebe zur Sicherung eines auf eine Kupplung aufgesetzten Portals gegen ein Verkippen,

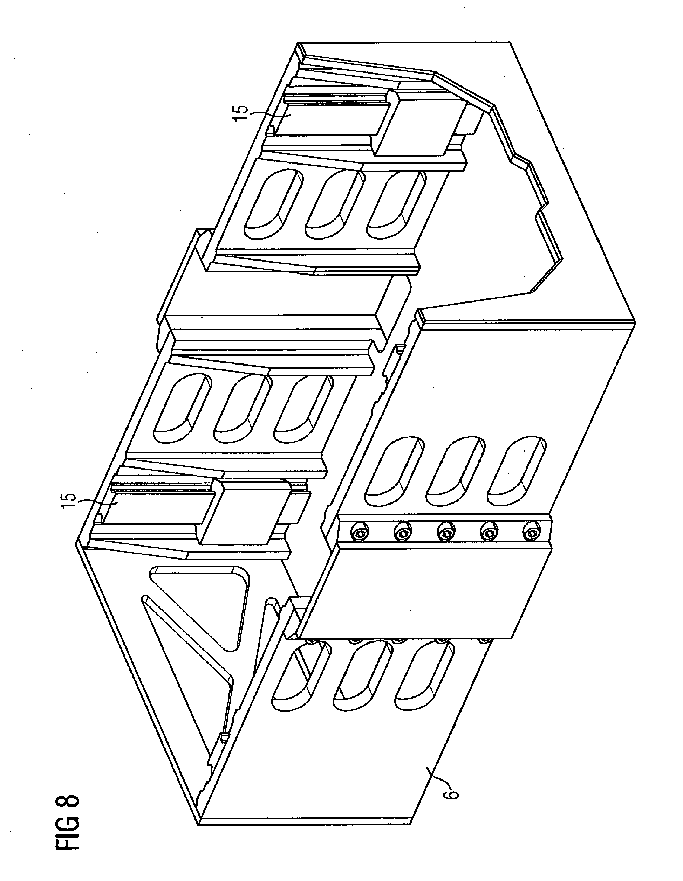

- Figur 8: einen Basisträger für eine adaptive Aufnahme des Hon- oder Fräsmoduls der Kupplungsbohrungs-Bearbeitungsvorrichtung in perspektivischer Darstellung,
- Figur 9: das Honmodul der Kupplungsbohrungs-Bearbeitungsvorrichtung aus Figur 1 in perspektivischer Darstellung,

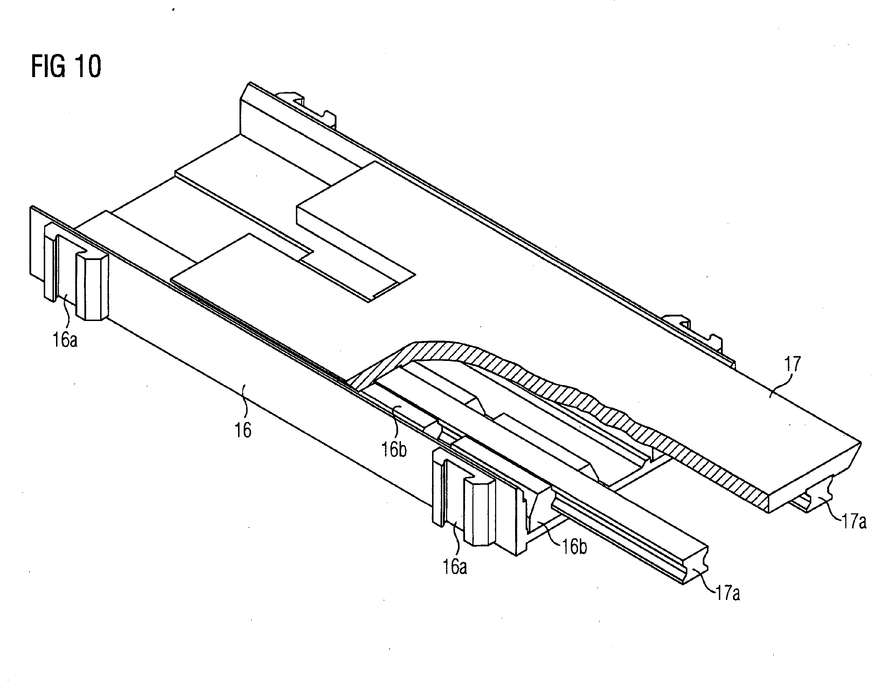

- Figur 10: in perspektivischer Darstellung einen Grundkörper des Honmoduls aus Figur 9 mit daran geführtem Hon-Hub-Schlitten in perspektivischer Ansicht von oben,

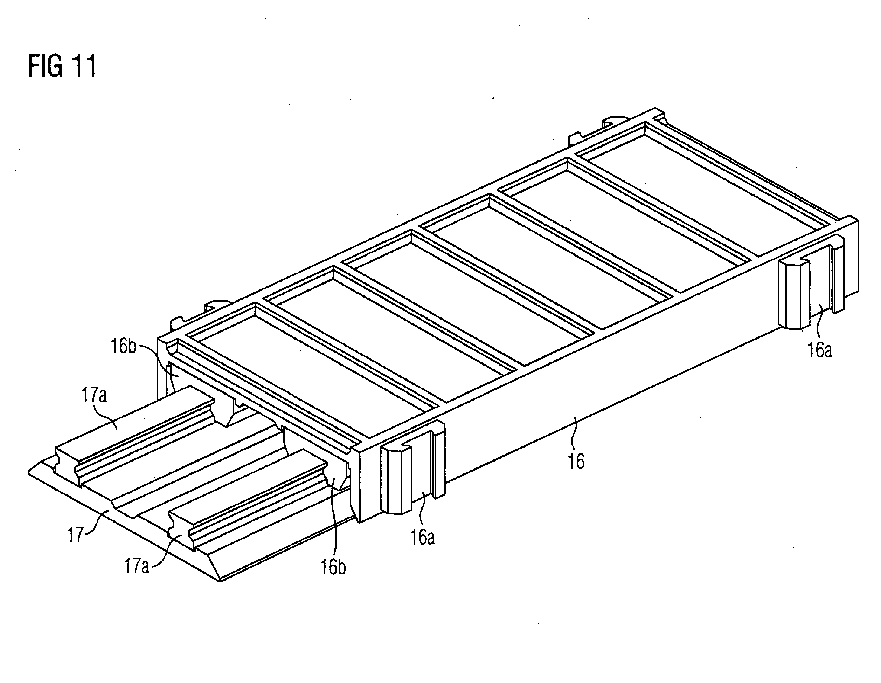

- Figur 11: den Grundkörper aus Figur 10 in perspektivischer Ansicht von unten,
- Figur 12: ein Zirkular-Fräsmodul gemäß der vorliegenden Erfindung für eine Kupplungsbohrungs-Bearbeitungsvorrichtung,

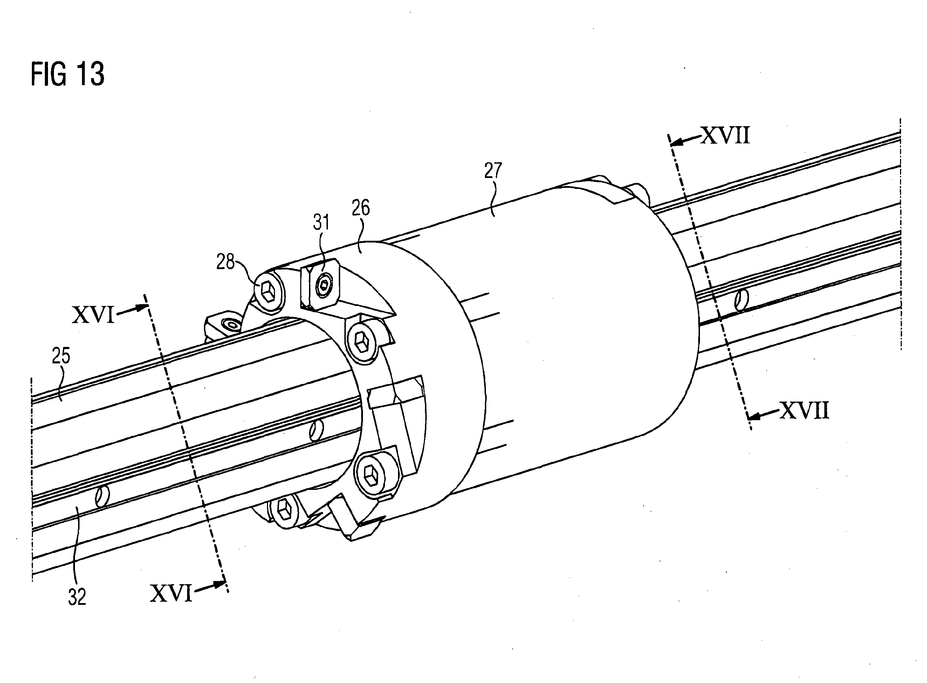

- Figur 13: einen an einer Frässpindel montierten Fräskopf des in Figur 12 dargestellten Zirkular-Fräsmoduls in vergrößerter, perspektivischer Darstellung,

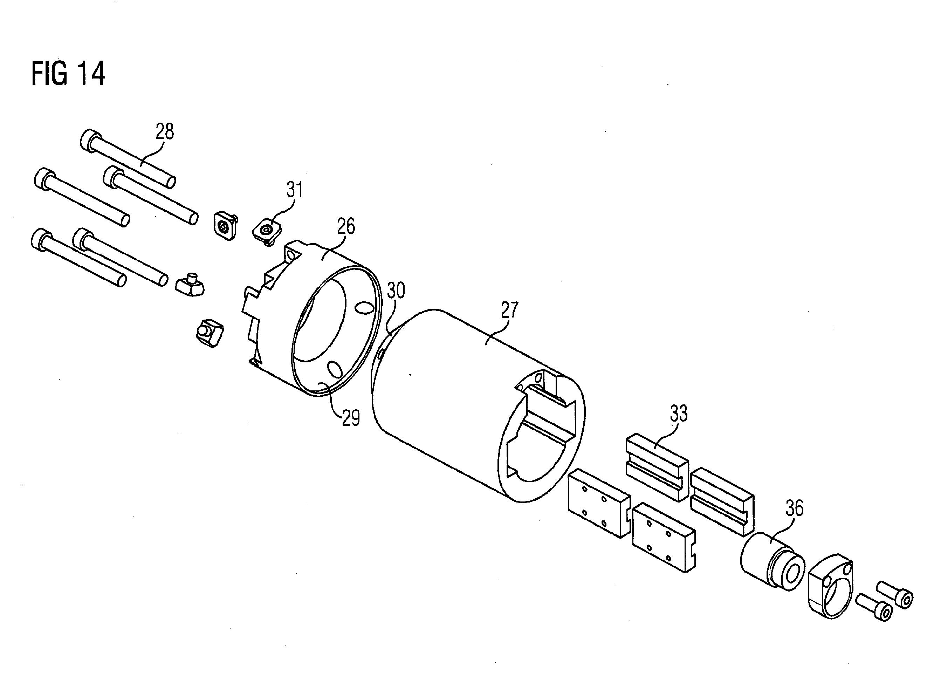

- Figur 14: den Fräskopf aus Figur 13 in perspektivischer Explosionsansicht,

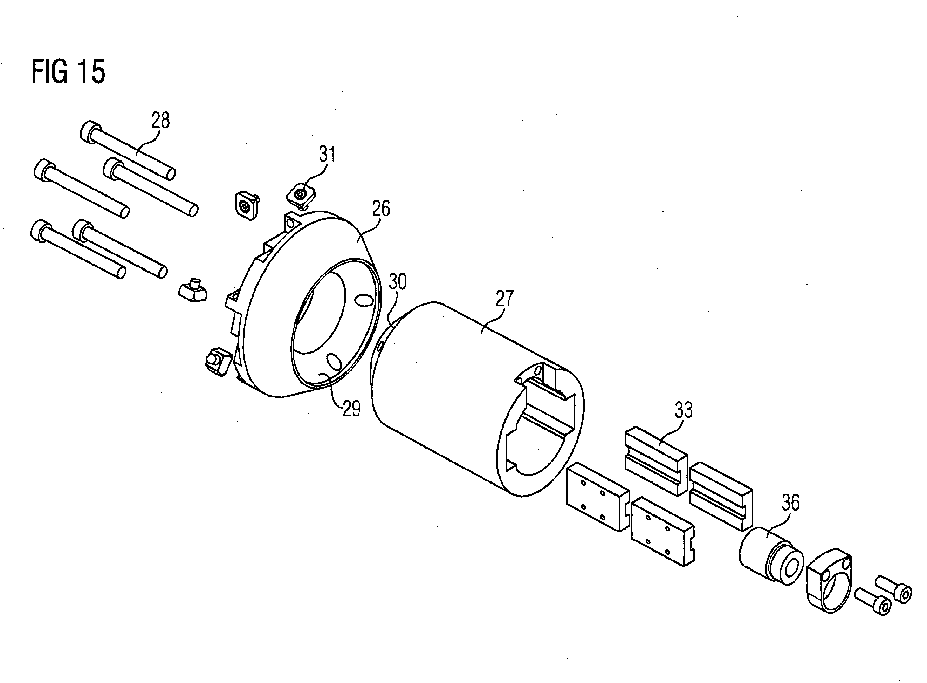

- Figur 15: den Fräskopf mit alternativem Werkzeugkopf für größere Durchmesser in perspektivischer Explosionsansicht,

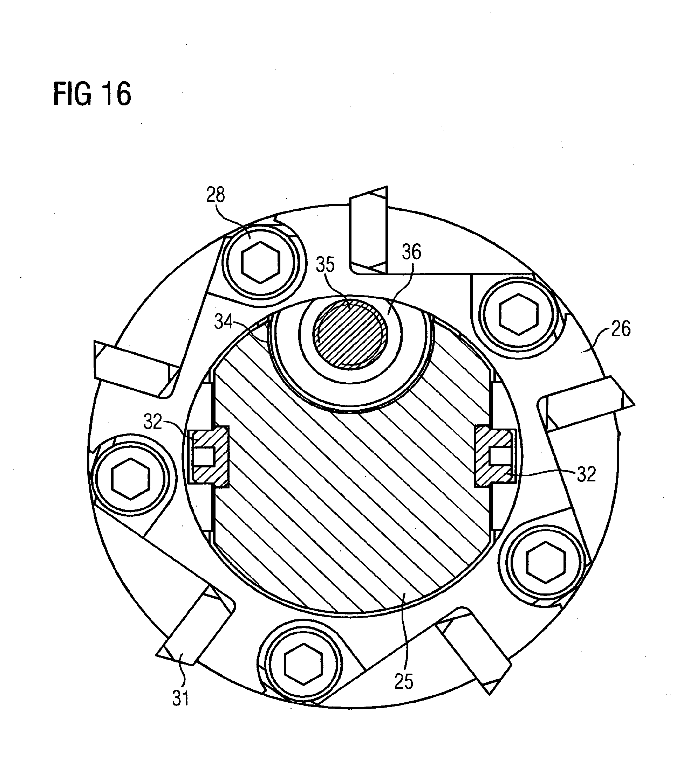

- Figur 16: die Anordnung der Figur 13 im Querschnitt entlang der Linie XVI-XVI,

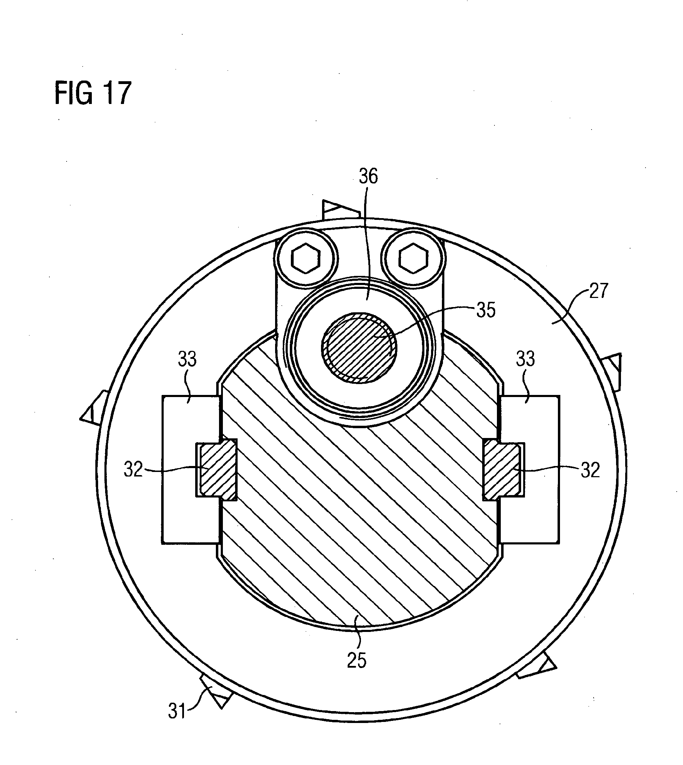

- Figur 17: die Anordnung aus Figur 13 im Querschnitt entlang der Linie XVII-XVII,

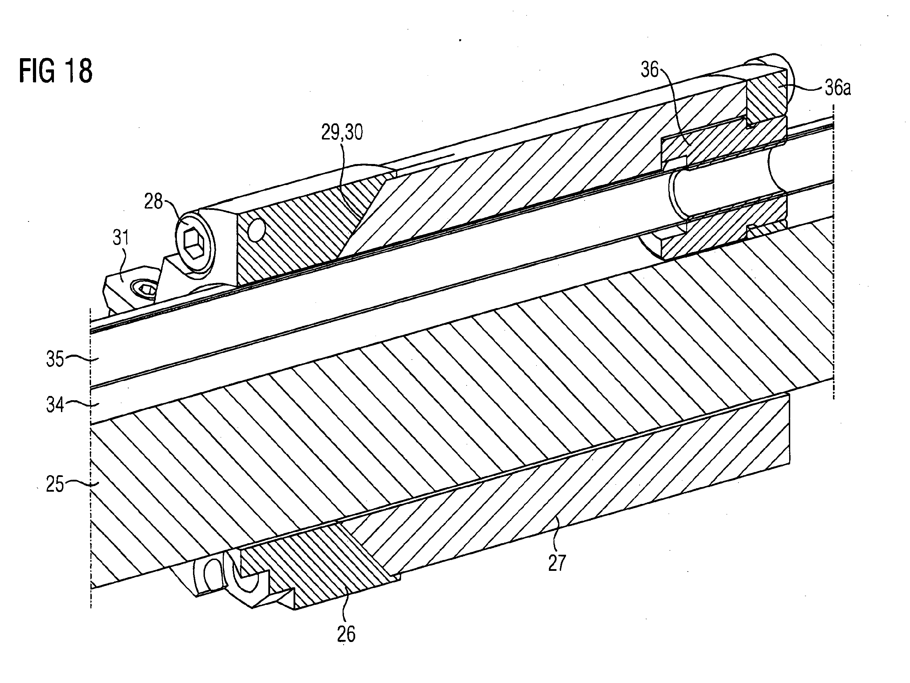

- Figur 18: die Anordnung aus Figur 11 im Längsschnitt durch die Gewindespindel bzw. Antriebsspindel,

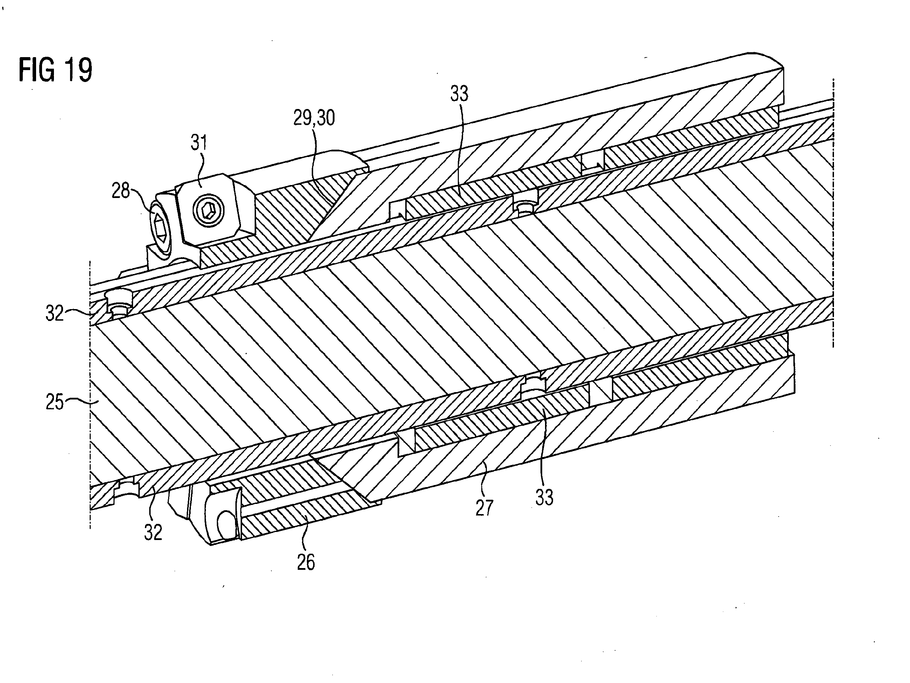

- Figur 19: die Anordnung aus Figur 13 im Längsschnitt durch die Führungsmittel, und
- Figur 20: den Querbalken des Zirkular-Fräsmoduls aus Figur 12 mit integriertem Antrieb für die Frässpindel.

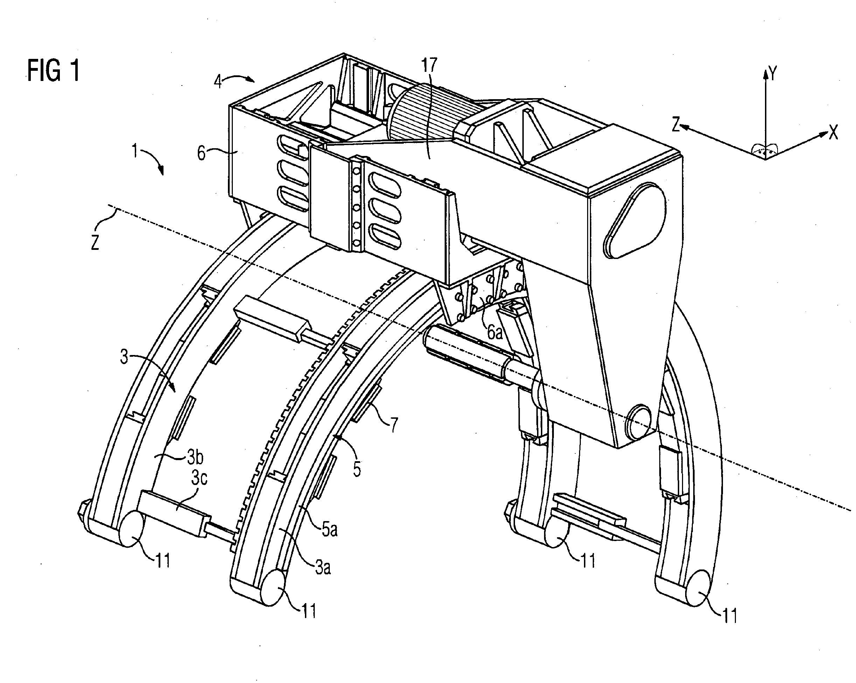

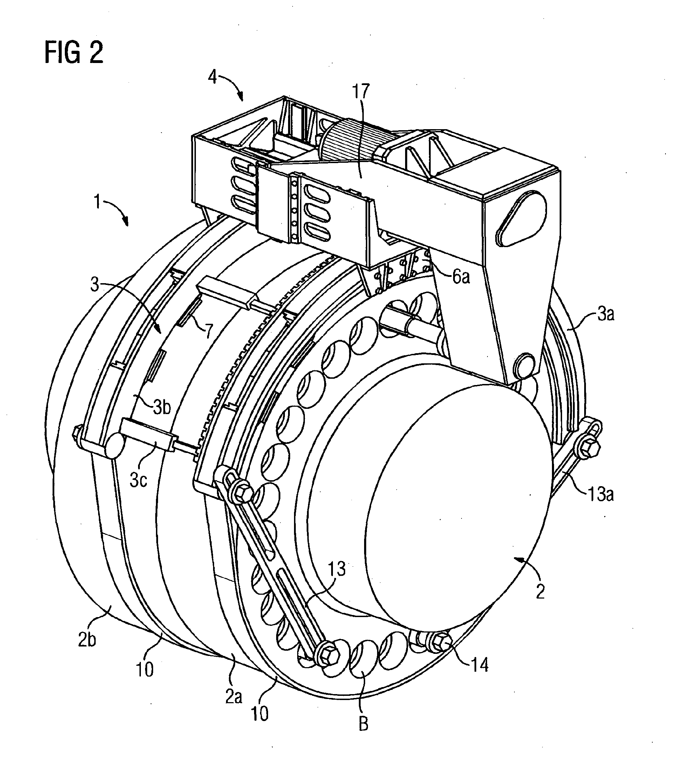

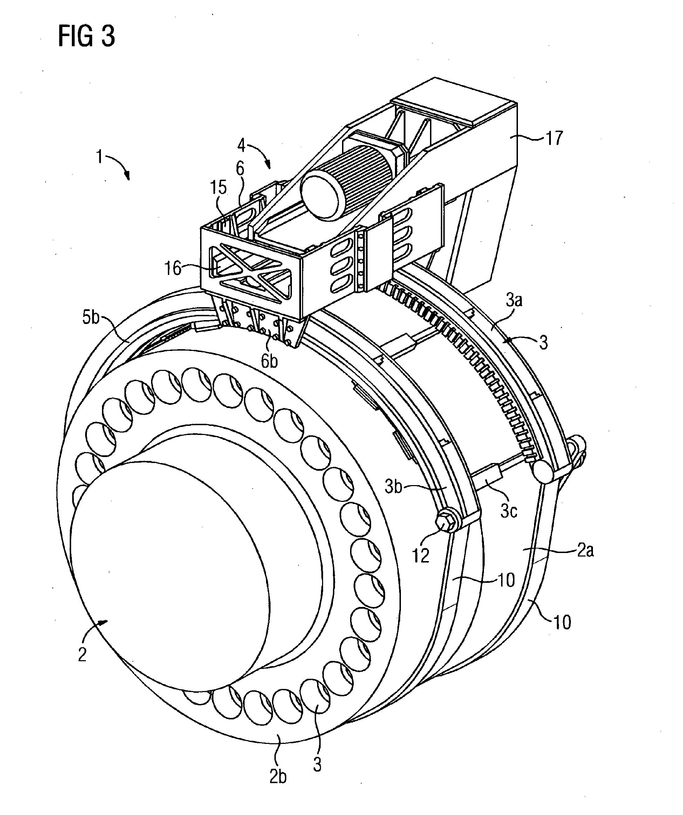

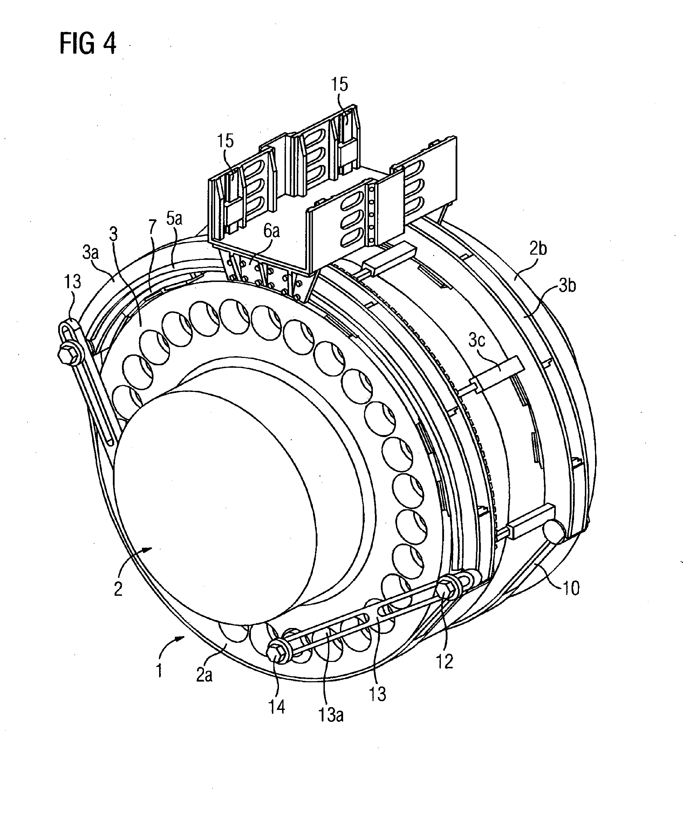

In den Figuren 1 bis 4 ist eine Kupplungsbohrungs-Bearbeitungsvorrichtung 1 dargestellt, die dazu dient, auf einem Teilkreis liegende Bohrungen B von Kupplungsflanschen 2a, 2b einer Kupplung 2 zu bearbeiten. Die Kupplungsbohrungs-Bearbeitungsvorrichtung umfasst ein Portal 3, das zwei parallel zueinander angeordnete, bogenförmig ausgebildete Ständer 3a, 3b aufweist, die durch mehrere sich quer zu den Ständern 3a, 3b erstreckende Verbindungsstreben 3c miteinander verbunden sind. Dabei sind die Verbindungsstreben 3c in der Länge veränderbar, so dass der Abstand der Ständer 3a, 3b und damit die Breite des Portals eingestellt werden kann.

Zu der Kupplungsbohrungs-Bearbeitungsvorrichtung 1 gehört weiterhin eine Bearbeitungseinheit 4, die an einer Kreisbogenführung 5 des Portals 3 in einer X-Y-Ebene bewegbar geführt ist. In der Zeichnung und insbesondere den Figuren 1 bis 3 ist gut erkennbar, dass die Bearbeitungseinheit einen Basisträger 6 aufweist, welcher auf das Portal 3 aufgesetzt ist und zwei nach unten abragende Führungen 6a, 6b aufweist, die mit entsprechenden Führungsschienen 5a, 5b der Kreisbogenführung 5 in Eingriff stehen. Nicht dargestellt ist, dass Arretiermittel vorgesehen sind, um den Basisträger 6 in verschiedenen Positionen entlang des Portals 3 zu fixieren.

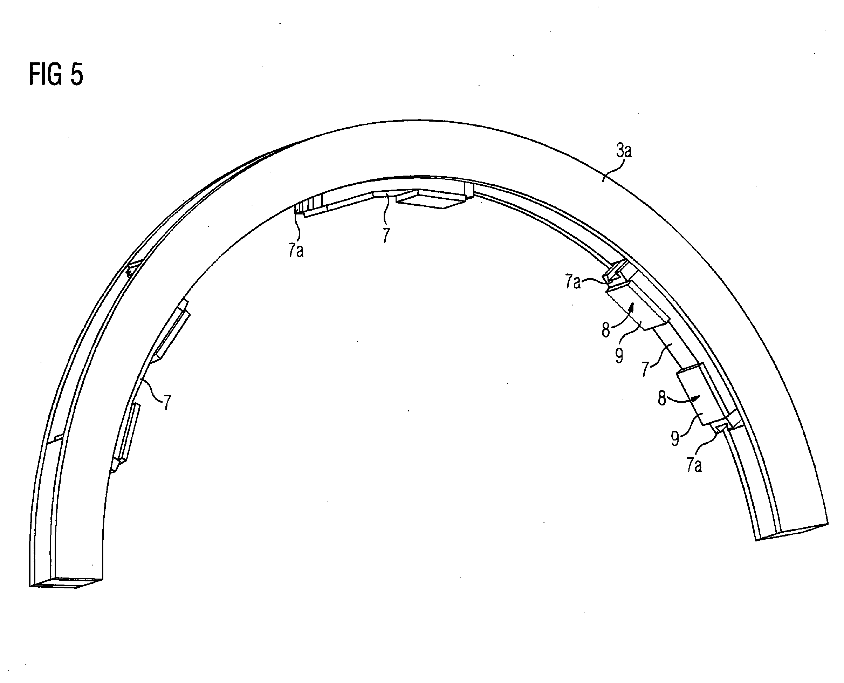

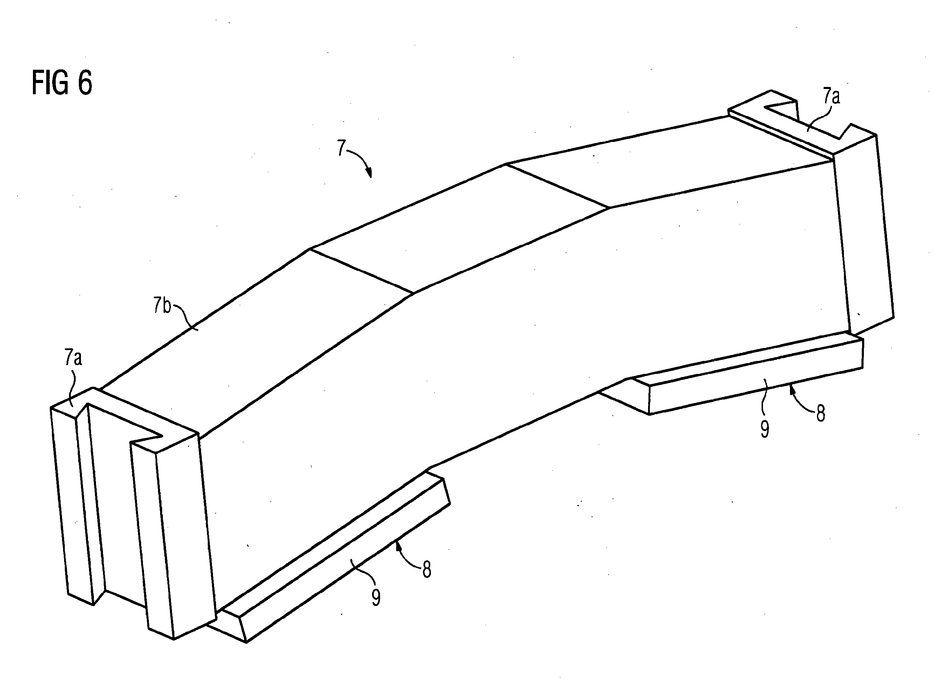

Das Portal 3 ist ausgebildet, um unmittelbar auf das Portal 3 aufgesetzt und daran fixiert zu werden. Hierzu weist das Portal 3 Stützfüße 7 auf, die an dem Portal 3 in einer radial bezüglich der Kreisbogenführung 5 liegenden Y-Richtung verstellbar gehalten sind. Konkret ist an den Ständern 3a, 3b des Portals 3 jeweils ein Satz von drei Stützfüßen 7 vorgesehen, die gleichmäßig verteilt entlang der Kreisbogenführung 5 angeordnet und in der Y-Richtung entlang von klemmbaren Prismenführungen 7a verstellbar sind. Wie insbesondere in den Figuren 5 und 6 gut erkennbar ist, weist jeder Stützfuß 7 jeweils zwei Kontaktflächen 8 auf, die in ihrem zentralen Bereich etwa tangential zu der Kreisbogenführung 5 ausgerichtet sind. Die Kontaktflächen 8 sind an Kontaktplatten 9 ausgebildet, die an einem Grundkörper 7b des zugehörigen Stützfußes 7 lösbar angebracht, insbesondere festgeschraubt sind.

Die in Y-Richtung verstellbaren Stützfüße 7 erlauben es, die Ständer 3a, 3b des Portals 3 auf die Kupplungsflansche 2a, 2b aufzusetzen und dort derart zu positionieren, dass die Kreisbogenführung 5 koaxial zu dem Teilkreis der Bohrungen B bzw. der Kupplungsachse liegen. Demzufolge ist während der Bearbeitung lediglich ein Verfahren der Bearbeitungseinheiten entlang der Kreisbogenführung 5 des Portals 3 für eine sukzessive Bearbeitung der Kupplungsbohrungen 2b notwendig. Dem Stützfuß 7 kommt dabei die Aufgabe zu, den radialen Abstand zwischen dem Außendurchmesser der Kupplung 2 zum Innendurchmesser des Portals 3 zu überbrücken und des Weiteren einen stabilen und sicheren Kontakt des Portals 3 zur Kupplung 2 zu gewährleisten. Der notwendige Hubweg der Stützfüße 7 orientiert sich dabei am abzudeckenden Außendurchmesserspektrum der Kupplung. Durch die Anordnung von jeweils drei Stützfüßen 7 mit jeweils zwei Kontaktflächen 8 wird eine gute Abstützung des Portals 3 an den Kupplungsflanschen 2a, 2b erreicht.

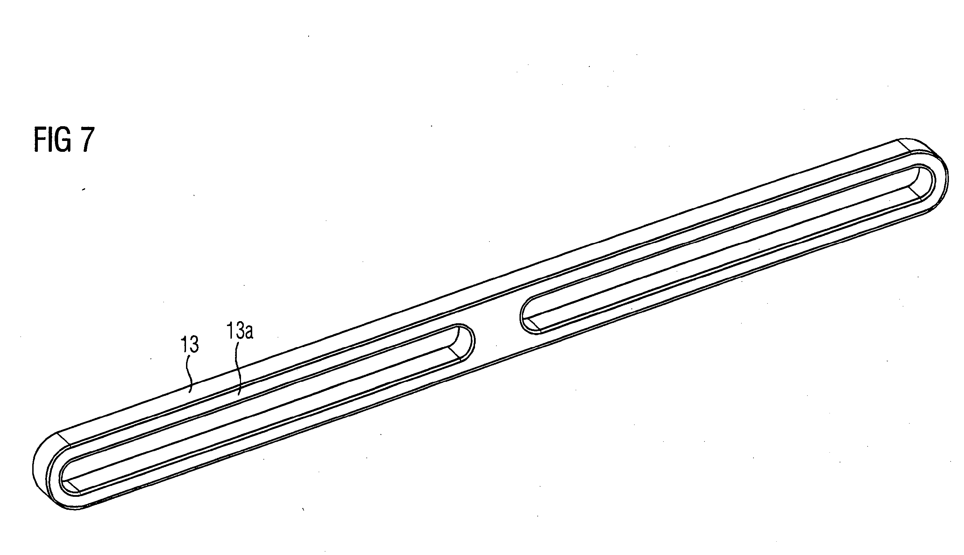

Zur Fixierung des Portals 3 an der Kupplung 2 sind Befestigungsmittel vorgesehen. Konkret ist jedem Ständer 3a, 3b des Portals 3 ein Spanngurt 10 zugeordnet, welcher um die Unterseite der Kupplungsflansche 2a, 2b gelegt und an den unteren Enden des zugehörigen Ständers 2a, 2b fixiert und festgespannt ist. Hierzu sind an den Endbereichen der Ständer 3a, 3b Durchgangsbohrungen 11 für Befestigungsbolzen 12 vorgesehen. Des Weiteren weisen die Befestigungsmittel eine Kippsicherung auf, die das Portal 3 zusätzlich gegen ein Verkippen sichern. Die Kippsicherung weist hier zwei Befestigungsstreben 13 auf, die an dem Portal 3 einerseits und der Kupplung 2 andererseits befestigt sind. Portalseitig erfolgt die Befestigung über die Befestigungsbolzen 12, durch welche auch die Spanngurte 10 an den Ständern 3a, 3b fixiert sind, und kupplungsseitig werden die dort ohnehin vorhandenen Bohrungen B genutzt, um die Befestigungsstreben 13 über entsprechende Befestigungsbolzen 14 zu fixieren. Wie insbesondere in der Figur 7 gezeigt ist, weisen die Befestigungsstreben 13 Langlöcher 13a auf, die eine Längeneinstellung ermöglichen.

Der Basisträger 6 der Bearbeitungseinheit besitzt eine Schnittstelle zur Verbindung mit einem Bearbeitungsmodul der Bearbeitungseinheit. Diese Schnittstelle umfasst nicht näher dargestellte Verbindungsmittel zur Herstellung einer elektrischen Verbindung sowie Verbindungsmittel zum Anschluss an eine Steuerungseinrichtung. Des Weiteren umfasst die Schnittstelle des Basisträgers 4 Führungsschienen 15, über welche ein Bearbeitungsmodul der Bearbeitungseinheit an dem Basisträger 6 in einer radial bezüglich der Kreisbogenführung 5 des Portals 3 liegenden Y-Richtung verstellbar anbringbar ist.

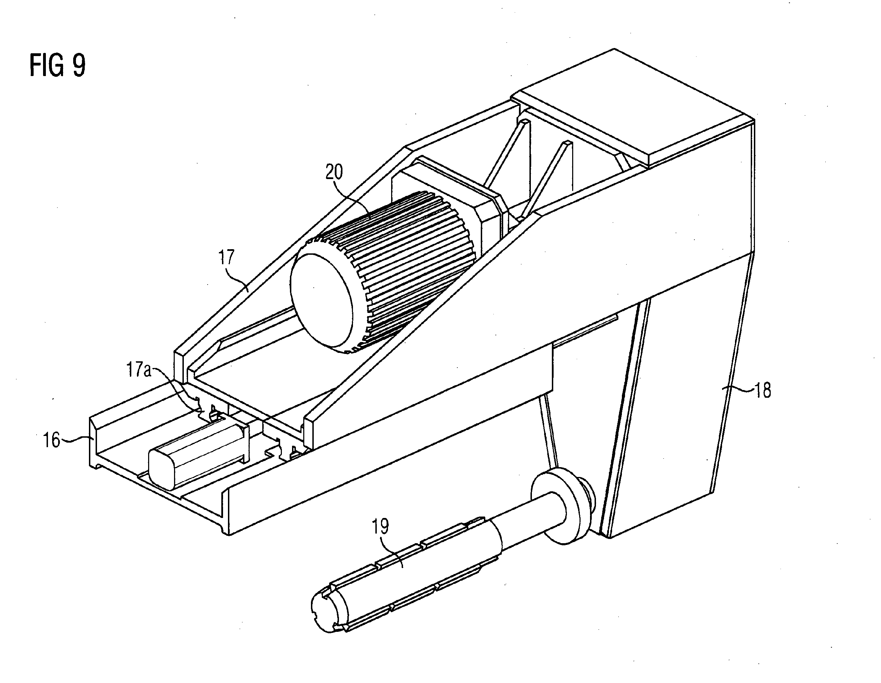

Wie in den Figuren 1 bis 3 dargestellt ist, kann ein Bearbeitungsmodul als ein Honmodul ausgebildet sein. Dieses umfasst einen an dem Basisträger 6 anbringbaren Grundkörper 16, der eine zu der Schnittstelle des Basisträgers 6 korrespondierende Schnittstelle besitzt. Insbesondere weist der Grundkörper 16 Führungsnuten 16a auf, die mit den in Y-Richtung verlaufenden Führungsschienen 15 des Basisträgers 6 korrespondieren. An dem Grundkörper 16 ist ein Schlitten 17 in einer Z-Richtung, die senkrecht zu der durch die Kreisbogenführung 5 definierten X-Y-Ebene liegt, verstellbar gehalten. Hierzu sind entsprechende Führungsschienen 17a und damit in Eingriff stehende Führungsnuten 16b am Schlitten 17 und am Grundkörper 16 vorgesehen. Der Schlitten 17 wiederum trägt an seinem einen Endbereich einen sich in Y-Richtung erstreckenden Querträger 18, an dessen unterem Ende ein Honkopf 19 mit einer in Z-Richtung liegenden Rotationsachse montiert ist. Der Schlitten 17 trägt ferner einen Honantrieb 20, der mit dem Honkopf 19 über ein in dem Querträger 18 untergebrachtes Getriebe verbunden ist (siehe auch Figur 9).

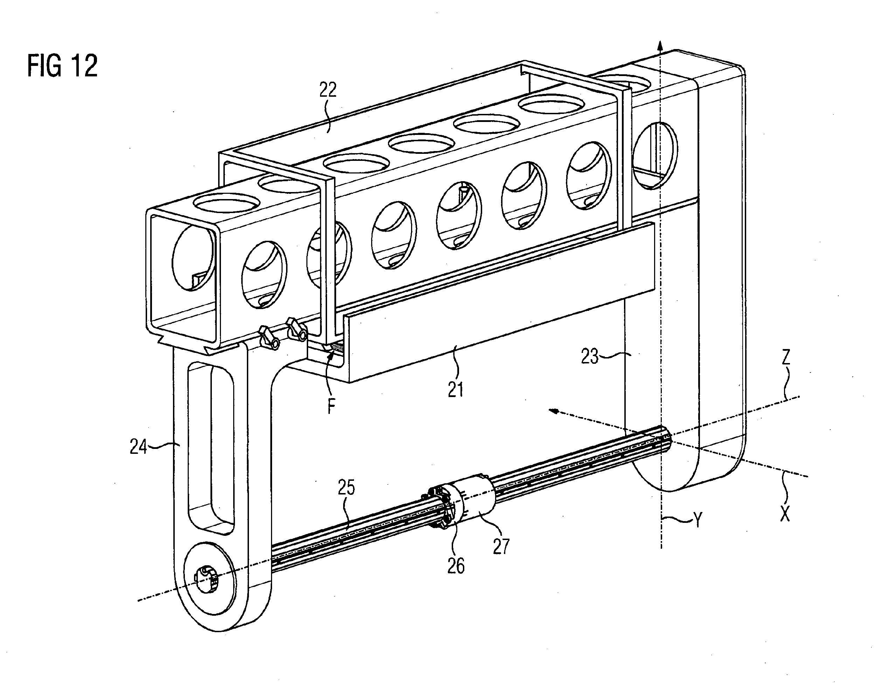

Des Weiteren ist ein Bearbeitungsmodul vorgesehen, welches als ein Zirkular-Fräsmodul ausgebildet ist. Dieses umfasst einen an dem Basisträger 6 anbringbaren Grundkörper 21, der eine zu der Schnittstelle des Basisträgers 6 korrespondierende Schnittstelle umfasst. Der Grundkörper 21 trägt einen Rahmen 22, der an dem Grundkörper 21 in einer X-Richtung, die senkrecht zu der Y-Richtung und parallel zu der X-Y-Ebene liegt, verstellbar gehalten ist, wozu der Grundkörper 21 und der Rahmen 22 entsprechende Führungsmittel F aufweisen, die in Figur 12 erkennbar sind.

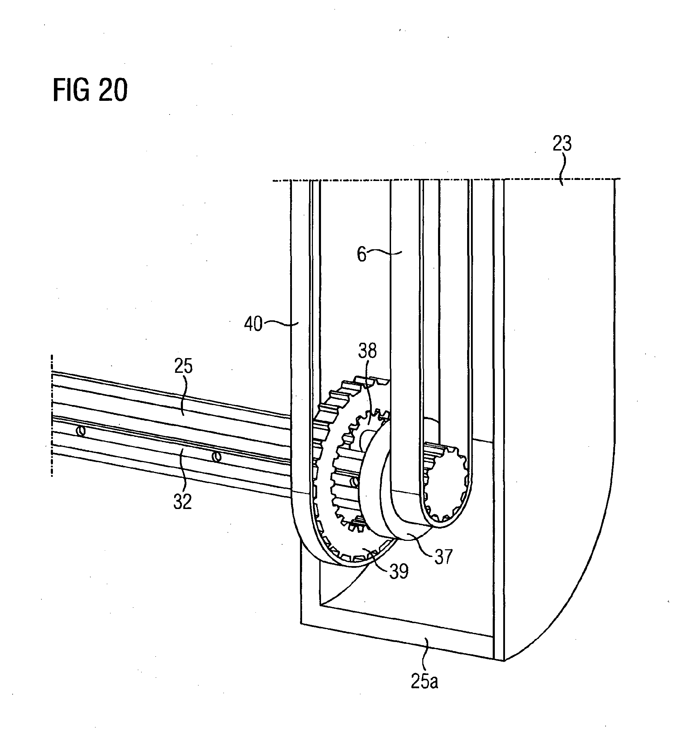

Der Rahmen 22 trägt zwei Tragarme 23, 24, wobei der erste Tragarm 23 an einem axialen Endbereich des Rahmens 22 in der Y-Richtung verstellbar angebracht ist und der andere Tragarm 24 mit dem ersten Tragarm 23 an seinem oberen Endbereich in Z-Richtung verstellbar verbunden ist. An dem unteren Ende der Tragarme 23, 24 ist eine Frässpindel 25 mit einer in Z-Richtung verlaufenden Rotationsachse nach Art einer Fest-Los-Lagerung montiert, wobei das Festlager an dem mit dem Rahmen 22 verbundenen Tragarm 23 vorgesehen ist. In diesem Tragarm 23 ist auch das Getriebe 6 unterbracht, über welches die Frässpindel 25 mit einem an dem Grundkörper 21 vorgesehenen Antrieb verbunden ist. Von dem Getriebe 6 ist in der Figur 20 ein Zahnriemen erkennbar, der mit einem endseitig von der Frässpindel 25 vorgesehenen Antriebsritzel 25a in Eingriff steht.

Die Frässpindel 25 trägt einen Fräskopf 26, der an der Frässpindel 25 drehfest, jedoch axial bewegbar montiert ist. Der Fräskopf 26 ist im Stil eines standardisierten Eckenfräsers aufgebaut und trägt an seiner vom Support 27 weg weisenden Stirnseite 5 handelsübliche Wendeschneidplatten 31, die an dem Fräskopf 26 festgeschraubt sind. Der Fräskopf 26 ist an einem Support 27 durch fünf Schrauben 28 stirnseitig lösbar montiert. Für eine genaue Ausrichtung des Fräskopfes 26 an dem Support 27 sind die beiden Bauteile 26, 27 mit zueinander korrespondierenden, kegelförmigen Zentrierflächen 29, 30 versehen. Die lösbare Anordnung des Fräskopfes 26 an dem Support 27 bietet die Möglichkeit, den Fräskopf 26 auszutauschen, wozu dieser geteilt ausgeführt sein kann.

Die Frässpindel 25 einerseits und der Support 27 andererseits besitzen zueinander korrespondierende, sich in Axialrichtung - d.h. in Z-Richtung - erstreckende Führungsmittel 32, 33. In dem hier dargestellten Ausführungsbeispiel sind an diametral gegenüberliegenden Seiten der Frässpindel 25 Führungsschienen 32 ausgebildet, die mit entsprechenden, in den Support 27 eingesetzten Führungswagen 33 in Eingriff stehen. Des weiteren ist in der Frässpindel 25 in Umfangsrichtung betrachtet mittig zwischen den Führungsmitteln 32, 33 eine Ausnehmung 34 vorgesehen, in welcher eine Gewindespindel - hier eine Kugelumlaufspindel 35 - in Z-Richtung liegend angeordnet und drehbar gelagert ist. Die Kugelumlaufspindel 35 trägt eine Gewindemutter 36, die mit dem Support 27 derart in Eingriff steht, dass eine Drehung der Kugelumlaufspindel 33 in eine Axialbewegung des Supports 27 und damit des Fräskopfes 26 umgesetzt wird.

Die Kugelumlaufspindel 35 ist an ihren axialen Endbereichen in entsprechenden Flanschen 37 der Frässpindel 25 drehbar gelagert. Des Weiteren trägt die Kugelumlaufspindel 35 ein Antriebsritzel 38, welches mit der Innenseite eines Hohlrades 39 kämmt, das koaxial zu der Frässpindel 25 drehbar gehalten und über einen im Tragarm 23 untergebrachten Zahnriemen 40 mit einem Antrieb verbunden ist.

Im Betrieb wird das Portal 3 mit dem Basisträger 6 unmittelbar an der zu bearbeitenden Kupplung 2 fixiert. Hierzu werden die Ständer 3a, 3b des Portals 3 auf die beiden Kupplungsflansche 2a, 2b aufgesetzt und dabei möglichst randnah positioniert, indem die Länge der Verbindungsstreben 3c, über welche die Ständer 3a, 3b miteinander verbunden sind, entsprechend eingestellt wird. Anschließend werden die Stützfüße 7 über die Prismenführungen 7a so verstellt, dass die Kreisbogenführung 5 koaxial zu der Kupplungsachse und damit zu dem Teilkreis der Bohrungen B liegt. Auf diese Weise ist während der Bearbeitung lediglich ein Verfahren der Bearbeitungseinheit entlang der Kreisbogenführung 5 des Portals 3 für eine sukzessive Bearbeitung der Kupplungsbohrungen B notwendig.

Nach erfolgter Ausrichtung der Ständer 3a, 3b werden diese an den Kupplungsflanschen 2a, 2b über die Spanngurte 10 fixiert. Zusätzlich werden die Befestigungsstreben 13 über die Befestigungsbolzen 14 an dem Portal 3 einerseits und der Kupplung 2 andererseits fixiert. Durch diese Sicherung mittel der Befestigungsstreben 13 sowie die Abstützung über die beiden Gruppen von jeweils drei Stützfüßen 7 wird das Portal 3 optimal an der Kupplung 2 abgestützt und gegen ein Verkippen gesichert.

Anschließend wird das Fräsmodul über seinen Grundkörper 21 an dem Basisträger 6 montiert. Bei dieser Montage sind die Frässpindel 25 und der das Loslager für die Frässpindel 25 bildende Tragarm 24 entfernt. Anschließend wird die Frässpindel 25 mit dem montierten Fräskopf 26 durch ein zu bearbeitendes Bohrungspaar der beiden Kupplungsflansche 2a, 2b geschoben und an dem Tragarm 23, welcher das Festlager für die Frässpindel 25 bildet, montiert. Hierzu wird der Basisträger 6 entlang der Kreisbogenführung 5 der Tragarme 23 gegenüber dem Rahmen 22 und der Rahmen 22 gegenüber dem Grundkörper 21 des Fräsmoduls entsprechend verstellt.

Nach so erfolgter Montage und Ausrichtung des Fräsmoduls wird der Zirkular-Fräsvorgang durchgeführt. Hierzu wird die Frässpindel 25 mit der geeigneten Drehzahl angetrieben, und des Weiteren werden die Antriebe für die Kugelumlaufspindel 35, den Rahmen 22 und den Tragarm 23 betätigt, um die Tragarme 23, 24 in der X-Y-Ebene zu bewegen und auf diese Weise die Position der Spindelachse in der X-Y-Ebene zu verändern und so den Zirkular-Fräsprozess auszuführen und koordiniert hierzu den Fräskopf 26 entlang der Frässpindel 25 zu bewegen. Dieser Vorgang wird über eine zentrale Steuerung automatisch ausgeführt.

Zur Bearbeitung einer weiteren Bohrung werden der Loslager-Tragarm 24 und die Frässpindel 25 zunächst entfernt. Anschließend wird die Bearbeitungseinheit entlang der Kreisbogenführung des Portals 3 an die geeignete Position verfahren, bevor die Frässpindel 25 und der Loslager-Tragarm 24 wieder montiert werden, um den nächsten Zirkular-Fräsprozess auszuführen.

Während der Fräsbearbeitung kann der Fräskopf 26 ausgetauscht werden, um unterschiedlich große Durchmesser bearbeiten zu können bzw. eine Schrupp- und Schlichtbearbeitung durchzuführen.

Nach beendeter Fräsbearbeitung wird das Fräsmodul entfernt, das Honmodul an dem Basisträger 6 montiert und in an sich bekannter Weise der Honvorgang ausgeführt, um die Endbearbeitung vorzunehmen. Dieser Vorgang kann vollautomatisch erfolgen, da für eine sukzessive Bearbeitung der Kupplungsbohrungen B der Basisträger 6 lediglich entlang der Kreisbogenführung 5 des Portals 3 verstellt zu werden braucht.

## Patentansprüche

1. Zirkular-Fräsmodul,insbesondere für den Einsatz in einer Kupplungsbohrungs-Bearbeitungsvorrichtung (1), das einen an einem Basisträger (6) anbringbaren Grundkörper (16), eine mit einem Antrieb verbundene Frässpindel (25) mit einer in Z-Richtung verlaufenden Spindelachse, an der ein Fräskopf (26) drehfest aber axial verstellbar montiert oder montierbar ist, und einen Antrieb zur Vorstellung eines an der Frässpindel (25) gehaltenen Fräskopfes (26) in Z-Richtung aufweist,
**dadurch gekennzeichnet, dass**
mit dem Grundkörper (16) Tragarme (23, 24) verbunden sind, an denen die Frässpindel (25) gelagert ist und die gegenüber dem Grundkörper (16) in einer senkrecht zu der Z-Richtung liegenden X-Y-Ebene durch entsprechende Antriebe motorisch verstellbar sind,
und dass die Antriebe mit einer Steuerung gekoppelt sind, welche die Bewegung der Tragarme (23, 24) in der X-Y-Ebene, die Drehgeschwindigkeit der Frässpindel (25) und den Vorschub eines an der Frässpindel (25) angebrachten Fräskopfes (26) in Z-Richtung zur Ausführung eines Zirkular-Fräsprozesses steuert (CNC).

2. Zirkular-Fräsmodul nach Anspruch 1,
**dadurch gekennzeichnet, dass**
die beiden Tragarme (23, 24) in der Z-Richtung relativ zueinander verstellbar sind.

3. Zirkular-Fräsmodul nach Anspruch 1 oder 2,
**dadurch gekennzeichnet, dass**
die Tragarme (23, 24) an einem Rahmen (22) angebracht und gegenüber diesem in einer X-Richtung verstellbar sind, und der Rahmen (22) an dem Grundkörper (16) in einer Y-Richtung verstellbar gehalten ist.

4. Zirkular-Fräsmodul nach einem der Ansprüche 2 bis 3,
**dadurch gekennzeichnet, dass**
die beiden Tragarme (23, 24) miteinander verbunden sind.

5. Zirkular-Fräsmodul nach einem der Ansprüche 2 bis 4,
**dadurch gekennzeichnet, dass**
ein Antrieb bzw. Getriebe für die Frässpindel (25) in einem Tragarm (26), insbesondere demjenigen Tragarm (23), der ein Festlager für die Frässpindel (25) bildet, untergebracht ist.

6. Zirkular-Fräsmodul nach einem der Ansprüche 2 bis 5,
**dadurch gekennzeichnet, dass**
ein Fräskopf (26) an der Frässpindel (25) drehfest, jedoch axial bewegbar montiert ist.

7. Zirkular-Fräsmodul nach Anspruch 6,
**dadurch gekennzeichnet, dass**
der Fräskopf (26) an einem Support (27) lösbar montiert ist, der an der Frässpindel (25) drehfest angebracht und axial verschiebbar geführt ist.

8. Zirkular-Fräsmodul nach Anspruch 7,
**dadurch gekennzeichnet, dass**
der Support (27) und/oder der Fräskopf (26) kegelförmige Zentrierflächen (29, 30) aufweisen.

9. Zirkular-Fräsmodul nach einem der Ansprüche 1 bis 8,
**dadurch gekennzeichnet, dass**
die Frässpindel (25) einerseits und der Support (27) bzw. der Fräskopf andererseits zueinander korrespondierende, sich in Axialrichtung erstreckende Führungsmittel (32, 33), insbesondere an der Frässpindel ausgebildete Führungsschienen (32) und in den Support (27) eingesetzte Führungswagen (33) aufweisen,
wobei korrespondierende Paare von Führungsmitteln (30, 31) insbesondere auf gegenüberliegenden Seiten der Spindelachse vorgesehen sind.

10. Zirkular-Fräsmodul nach einem der Ansprüche 1 bis 9,
**dadurch gekennzeichnet, dass**
in der Frässpindel (25) eine sich in Spindelachsrichtung erstreckende und insbesondere in Umfangsrichtung mittig zwischen den Führungsmitteln (32, 33) positionierte Ausnehmung (34) vorgesehen ist, in welcher eine Gewindespindel, insbesondere eine Kugelumlaufspindel (35) drehbar gelagert ist, die eine an dem Fräskopf (25) bzw. dem Support (27) fixierte Gewindemutter (34) trägt.

11. Zirkular-Fräsmodul nach Anspruch 10,
**dadurch gekennzeichnet, dass**
die Gewindespindel (33) ein Antriebsritzel (36) trägt, welches mit der Innenseite eines koaxial zu der Frässpindel (25) drehbar gehaltenen und antreibbaren Hohlrads (37) in Eingriff steht.

## Claims

1. Circular milling module, in particular for use in a coupling-bore machining device (1), which has a basic body (16) which can be mounted on a base carrier (6), a milling spindle (25) which is connected to a drive and has a spindle axis extending in the Z direction, on which milling spindle a milling head (26) is mounted or can be mounted in a rotationally fixed but axially displaceable manner, and a drive for adjusting a milling head (26) held on the milling spindle (25), in the Z direction,
**characterized in that**
supporting arms (23, 24) are connected to the base body (16), on which supporting arms the milling spindle (25) is mounted and which can be adjusted by motor by corresponding drives with respect to the basic body (16) in an X-Y plane lying perpendicular to the Z direction,
and **in that** the drives are coupled to a control which controls (CNC) movement of the supporting arms (23, 24) in the X-Y plane, the rotational speed of the milling spindle (25) and the feed motion of a milling head (26), mounted on the milling spindle (25), in the Z direction, to carry out a circular milling process.

2. Circular milling module according to Claim 1,
**characterized in that**
the two supporting arms (23, 24) are adjustable relative to one another in the Z direction.

3. Circular milling module according to Claim 1 or 2,
**characterized in that**
the supporting arms (23, 24) are mounted on a frame (22) and are adjustable with respect thereto in an X direction, and the frame (22) is held adjustably on the basic body (16) in a Y direction.

4. Circular milling module according to either of Claims 2 and 3,
**characterized in that**
the two supporting arms (23, 24) are connected to one another.

5. Circular milling module according to one of Claims 2 to 4,
**characterized in that**
a drive or gear mechanism for the milling spindle (25) is accommodated in a supporting arm (26), in particular that supporting arm (23) which forms a fixed bearing for the milling spindle (25).

6. Circular milling module according to one of Claims 2 to 5,
**characterized in that**
a milling head (26) is mounted in a rotationally fixed but axially movable manner on the milling spindle (25).

7. Circular milling module according to Claim 6,
**characterized in that**
the milling head (26) is releaseably mounted on a support (27) which is mounted on the milling spindle (25) in a rotationally fixed manner and guided in an axially displaceable manner.

8. Circular milling module according to Claim 7,
**characterized in that**
the support (27) and/or the milling head (26) have conical centring surfaces (29, 30).

9. Circular milling module according to one of Claims 1 to 8,
**characterized in that**
the milling spindle (25), on the one hand, and the support (27) or the milling head, on the other hand, have guide means (32, 33) which correspond to one another and extend in the axial direction, in particular guide rails (32) formed on the milling spindle and guide carriages (33) inserted into the support (27),
wherein corresponding pairs of guide means (30, 31) are provided in particular on opposite sides of the spindle axis.

10. Circular milling module according to one of Claims 1 to 9,
**characterized in that**
a cutout (34) which extends in the spindle axis direction and is positioned in particular in the circumferential direction essentially between the guide means (32, 33) is provided in the milling spindle (25), in which cutout a threaded spindle, in particular a recirculating ball spindle (35), is rotatably mounted, which threaded spindle bears a threaded nut (34) fixed to the milling head (25) or the support (27).

11. Circular milling module according to Claim 10,
**characterized in that**
the threaded spindle (33) bears a drive pinion (36) which is in engagement with the inner side of a hollow wheel (37) which is driveable and held rotatably coaxially to the milling spindle (25).

## Revendications

1. Module de fraisage circulaire, à utiliser notamment dans un dispositif ( 1 ) d'usinage de trous d'accouplement, qui a un corps ( 16 ) de base pouvant être mis sur un support ( 6 ) de base, une broche ( 25 ) de fraisage, qui est reliée à un entraînement, dont l'axe s'étend dans une direction Z et sur laquelle une tête ( 26 ) de fraisage est montée ou peut être montée en en étant solidaire en rotation, mais déplaçable axialement, et un entraînement pour le déplacement dans la direction Z d'une tête ( 26 ) de fraisage maintenue sur la broche ( 25 ) de fraisage,
**caractérisé en ce que**
au corps ( 16 ) de base sont reliés des bras ( 23, 24 ) de support, sur lesquels la broche ( 25 ) de fraisage est montée et qui peuvent, par rapport au corps ( 16 ) de base, être déplacés d'une manière motorisée par des entraînements correspondants dans un plan X-Y perpendiculaire à la direction Z, et **en ce que** les entraînements sont couplés à une commande, qui commande le déplacement des bras ( 23, 24 ) de support dans le plan X-Y, la vitesse de rotation de la broche ( 25 ) de fraisage et l'avance dans la direction Z pour la réalisation d'une opération de fraisage circulaire d'une tête ( 26 ) de fraisage mise sur la broche ( 25 ) de fraisage.

2. Module de fraisage circulaire suivant la revendication 1,
**caractérisé en ce que**
les deux bras ( 23, 24 ) de support peuvent être déplacés l'un par rapport à l'autre dans la direction Z.

3. Module de fraisage circulaire suivant la revendication 1 ou 2,
**caractérisé en ce que**
les bras ( 23, 24 ) de support sont mis sur un cadre ( 22 ) et peuvent être déplacés dans une direction X par rapport à celui-ci et le cadre ( 22 ) est maintenu sur le corps ( 16 ) de base en étant déplaçable dans une direction Y.

4. Module de fraisage circulaire suivant l'une des revendications 2 à 3,
**caractérisé en ce que**
les deux bras ( 23, 24 ) de support sont reliés l'un à l'autre.

5. Module de fraisage circulaire suivant l'une des revendications 2 à 4,
**caractérisé en ce que**
un entraînement ou des transmissions pour la broche ( 25 ) de fraisage est logé dans un bras ( 26 ) de support, notamment dans le bras ( 23 ) de support, qui forme un palier fixe pour la broche ( 25 ) de fraisage.

6. Module de fraisage circulaire suivant l'une des revendications 2 à 5,
**caractérisé en ce que**
une tête ( 26 ) de fraisage est montée solidaire en rotation de la broche ( 25 ) de fraisage, mais déplaçable axialement.

7. Module de fraisage circulaire suivant la revendication 6,
**caractérisé en ce que**
la tête ( 26 ) de fraisage est montée amovible sur un support ( 27 ), qui est solidaire en rotation de la broche ( 25 ) de fraisage et qui est guidé de manière à pouvoir coulisser axialement.

8. Module de fraisage circulaire suivant la revendication 7,
**caractérisé en ce que**
le support ( 27 ) et/ou la tête ( 26 ) de fraisage ont des surfaces ( 29, 30 ) de centrage coniques.

9. Module de fraisage circulaire suivant l'une des revendications 1 à 8,
**caractérisé en ce que**
la broche ( 25 ) de fraisage, d'une part, et le support ( 27 ) ou la tête de fraisage, d'autre part, ont des moyens ( 32, 33 ) de guidage se correspondant et s'étendant dans la direction axiale, notamment des rails ( 32 ) de guidage constitués sur la broche de fraisage et des chariots ( 33 ) de guidage insérés dans le support ( 27 ),
des paires en correspondance de moyens ( 30, 33 ) de guidage étant prévues, notamment, sur des côtés opposés de l'axe de la broche.

10. Module de fraisage circulaire suivant l'une des revendications 1 à 9,
**caractérisé en ce que**
il est prévu, dans la broche ( 25 ) de fraisage, un évidement ( 34 ), qui s'étend dans la direction de l'axe de la broche et qui est mis en position notamment dans la direction du pourtour au milieu entre les moyens ( 32, 33 ) de guidage, évidement dans lequel est montée tournante une broche filetée, notamment une broche ( 35 ) à circulation de billes, qui porte un écrou ( 34 ) taraudé, immobilisé sur la tête ( 25 ) de fraisage ou sur le support ( 27 ).

11. Module de fraisage circulaire suivant la revendication 10,
**caractérisé en ce que**
la broche ( 33 ) filetée porte un pignon ( 36 ) d'entraînement, qui engrène avec le côté intérieur d'une roue ( 7 ) à denture intérieure pouvant être entraînée et maintenue tournante coaxialement à la broche ( 25 ) de fraisage.
